# EUROPÄISCHE PATENTANMELDUNG

(11) **EP 3 486 046 A1**
(43) Veröffentlichungstag der Anmeldung: **22.05.2019**
(21) Anmeldenummer: 18203397.7
(22) Anmeldetag: 30.10.2018
(51) Int. Cl.: B25J 19/06, B25J 21/00, B23Q 7/02, B23Q 11/08, F16P 3/02, F16P 3/08

(54) **WERKSTÜCK-SCHLEUSE**

(30) Priorität: 17.11.2017 DE 102017127184
(71) Anmelder: Liebherr-Verzahntechnik GmbH, 87437 Kempten (DE)
(72) Erfinder: Hänschke, David, 87452 Altusried (DE); Appel, Michael, 87452 Altusried (DE)
(74) Vertreter: Behr, Wolfgang

(57) **Zusammenfassung**

Die vorliegende Erfindung zeigt eine Werkstück-Schleuse (1) für eine Vorrichtung zum Handhaben und/oder Bearbeiten von Werkstücken (4), welche einen Roboter (2) zum Handhaben und/oder Bearbeiten der Werkstücke (4) und eine Sicherheitsumzäunung (3) aufweist, wobei die Werkstück-Schleuse (1) mindestens eine geschlossene Position aufweist, in welcher die Werkstück-Schleuse (1) eine Öffnung (5) in der Sicherheitsumzäunung (3) verschließt, wobei die Werkstück-Schleuse (1) beim Verbringen eines Werkstücks (4) von dem Bereich innerhalb der Sicherheitsumzäunung (3) zu dem Bereich außerhalb der Sicherheitsumzäunung und/oder umgekehrt mindestens eine offene Position aufweist, in welcher sie die Öffnung (5) in der Sicherheitsumzäunung (3) zumindest teilweise freigibt. Die Steuerung des Roboters (2) weist eine Sicherheitsfunktion auf, welche eine Bewegung des Roboters (2) in einen sich innerhalb der Sicherheitsumzäunung (3) um die Werkstück-Schleuse (1) erstreckenden Sicherheitsbereich (10) verhindert, wenn sich die Schleuse (1) in der mindestens einen offenen Position befindet.

## Beschreibung

Die vorliegende Erfindung betrifft eine Werkstück-Schleuse für eine Vorrichtung zum Handhaben und/oder Bearbeiten von Werkstücken. Die Werkstück-Schleuse ist für solche Vorrichtungen vorgesehen, welche einen Roboter zum Handhaben und/oder Bearbeiten der Werkstücke und eine Sicherheitsumzäunung aufweisen.

Die Sicherheitsumzäunung dient dazu, um Bedienpersonen von einem Zutritt zum Arbeitsbereich des Roboters abzuhalten, und erlauben hierdurch einen sicheren Betrieb der Vorrichtung. Die Werkstück-Schleuse ist in der Sicherheitsumzäunung angeordnet und dient nun dazu, um Werkstücke aus dem Bereich innerhalb der Sicherheitsumzäunung in einem Bereich außerhalb der Sicherheitsumzäunung zu verbringen oder umgekehrt.

Werkstück-Schleusen können beispielsweise zum Entnehmen von Werkstücken aus dem Materialfluss innerhalb der Sicherheitsumzäunung zu Prüfzwecken dienen. Alternativ oder zusätzlich können Werkstück-Schleusen als Be- und/oder Entladestation genutzt werden.

Bekannte Werkstück-Schleusen weisen üblicherweise mindestens eine geschlossene Position auf, in welcher sie eine Öffnung in der Sicherheitsumzäunung verschließen. Hierdurch kann der Roboter in der geschlossenen Position der Werkstück-Schleuse innerhalb der Sicherheitsumzäunung ohne Einschränkung genutzt werden.

Beim Verbringen eines Werkstücks durch die Werkstück-Schleuse von einem Bereich innerhalb der Sicherheitsumzäunung zu einem Bereich außerhalb der Sicherheitsumzäunung oder umgekehrt durchläuft die Werkstück-Schleuse jedoch üblicherweise eine offene Position, was die Gefahr mit sich bringt, dass eine Bedienperson beispielsweise einen Arm durch die sich ergebende Öffnung hindurch streckt und seine Hand hierdurch in den Arbeitsbereich des Roboters gelangt.

Um dies zu verhindern, sind mechanische Lösungen bekannt, welche sicherstellen, dass die Werkstück-Schleuse die Öffnung innerhalb der Sicherheitsumzäunung immer verschließt, und dennoch ein Verbringen der Werkstücke erlaubt. Eine solche Lösung ist beispielsweise aus der DE 20 2007 01 67 25 bekannt. Hier sind verschiebbare Türelemente vorgesehen, welche sich in der Ladestellung und der Maschinenstellung zumindest teilweise überlappen, so dass sich bei einem Öffnungsvorgang die eine Seite erst zu öffnen beginnt, wenn sich die jeweils andere Seite bereits geschlossen hat. Hiermit ist allerdings ein hoher konstruktiver Aufwand verbunden.

Auch aus anderen Bereichen sind mechanische Schutzvorrichtungen bekannt. So zeigt die EP 1375088 B1 eine mechanische Schutzvorrichtung, bei welcher ein Roboter in eine zylinderförmige Schutzwandung hinein verfahren werden kann, um zwischen zwei Stationen hin und her verschwenkt zu werden, wobei die Schutzwandung die eine Station schützt, während der Roboter an der anderen Station tätig ist.

Weiterhin ist aus der EP 1306603 B2 ist ein Verfahren zum Steuern einer sicherheitsrelevanten Funktion einer Maschine, insbesondere eines Industrieroboters, bekannt, durch welches auf eine Sicherheitsumzäunung verzichtet werden kann. Hierfür wird der Schwenkbereich und die Position des Roboterarms sowie die Bewegungsrichtung und Bewegungsgeschwindigkeit des Roboterarms über einen Sensor erfasst. Weiterhin wird die Position, die Bewegungsrichtung und die Bewegungsgeschwindigkeit einer im Bereich des Roboters arbeitenden Person erkannt. Hierdurch soll sichergestellt werden, dass sich Roboter und Person nie treffen und in der Nähe des Roboterarms befindliche Personen niemals verletzt werden. Hierzu wird ein Schutzbereich um den Roboterarm herum situationsangepasst variabel festgelegt und wandert mit dem Roboterarm mit. Beim Eindringen der Person in den Schutzbereich wird eine sicherheitsrelevante Funktion ausgelöst, beispielsweise der Roboter ausgeschaltet. Dies setzt jedoch eine extrem aufwändige Erfassung und Ansteuerung voraus.

Aufgabe der vorliegenden Erfindung ist es, eine Werkstückschleuse zur Verfügung zu stellen, welche eine Verletzung einer Bedienperson durch den Roboter sicher verhindert.

Diese Aufgabe wird erfindungsgemäß in einem ersten Aspekt durch eine Werkstückschleuse gemäß Anspruch 1, und in einem zweiten Aspekt durch eine Werkstückschleuse gemäß Anspruch 3 gelöst.

Bevorzugte Ausgestaltungen der vorliegenden Erfindung sind Gegenstand der Unteransprüche.

Die vorliegende Erfindung umfasst gemäß einem ersten Aspekt eine Werkstück-Schleuse für eine Vorrichtung zum Handhaben und/oder Bearbeiten von Werkstücken, welche einen Roboter zum Handhaben und/oder Bearbeiten der Werkstücke und eine Sicherheitsumzäunung aufweist, wobei die Werkstück-Schleuse in der Sicherheitsumzäunung angeordnet ist und es erlaubt, mindestens ein Werkstück von einem Bereich innerhalb der Sicherheitsumzäunung zu einem Bereich außerhalb der Sicherheitsumzäunung zu verbringen und/oder umgekehrt, wobei die Werkstück-Schleuse mindestens eine geschlossene Position aufweist, in welcher die Werkstück-Schleuse eine Öffnung in der Sicherheitsumzäunung verschließt, wobei der Roboter eine Steuerung aufweist, welche in der geschlossenen Position der Werkstück-Schleuse ein Beladen und/oder Entladen der Werkstück-Schleuse mit mindestens einem Werkstück und/oder ein Bearbeiten eines durch die Werkstückschleuse in den Bereich innerhalb der Sicherheitsumzäunung verbrachten Werkstücks erlaubt, und wobei die Werkstückschleuse beim Verbringen eines Werkstücks von dem Bereich innerhalb der Sicherheitsumzäunung zu dem Bereich außerhalb der Sicherheitsumzäunung und/oder umgekehrt mindestens eine offene Position aufweist, in welcher sie die Öffnung in der Sicherheitsumzäunung zumindest teilweise freigibt. Gemäß dem ersten Aspekt weist die Steuerung eine Sicherheitsfunktion auf, welche eine Bewegung des Roboters in einen sich innerhalb der Sicherheitsumzäunung um die Werkstück-Schleuse erstreckenden Sicherheitsbereich verhindert, wenn sich die Schleuse in der mindestens einen offenen Position befindet.

Insbesondere wird hierfür in der Steuerung für den Zeitraum, in dem sich die Werkstück-Schleuse in einer offenen Position befindet, für den Roboter ein Sicherheitsbereich definiert, in den er nicht einfahren bzw. den er nicht überfahren darf.

Bevorzugt ist vorgesehen, dass für den Fall, dass eine für den Roboter vorgesehene Aufgabe ein Verfahren in den Sicherheitsbereich erforderlich macht, beispielsweise ein Ablegen, Aufnehmen und/oder Bearbeiten eines Werkstücks innerhalb des Sicherheitsbereiches ansteht, die Steuerung den Roboter anhält und/oder in eine sichere Position verfährt, bis sich die Werkstückschleuse wieder in einer geschlossenen Position befindet. Ein Abschalten des Roboters ist hierfür nicht notwendig. Vielmehr wird der Roboter durch die Steuerung so angesteuert, dass er anhält und/oder in eine sichere Position verfährt.

Weiter bevorzugt wird der Sicherheitsbereich aufgehoben und der Roboter kann wieder alle Positionen anfahren, wenn sich die Werkstück-Schleuse wieder in mindestens einer geschlossenen Position befindet.

Bevorzugt ist der Sicherheitsbereich innerhalb der Steuerung geometrisch definiert und/oder in einem Speicher der Steuerung in Form von geometrischen Daten abgespeichert. Hierdurch ist eine einfache Anpassung der Sicherheitsschleuse an die konkrete Einbausituation möglich.

Bevorzugt ist die Steuerung so ausgestaltet, dass sie Bewegungen des Roboters verhindert, durch welche diese in den Sicherheitsbereich eindringen würde, indem sie die Position mindestens eines Abschnitts des Roboters und bevorzugt die Position und/oder Bewegung aller beweglichen Elemente des Roboters im Voraus mit dem geometrisch definierten Sicherheitsbereich abgleicht.

Durch den ersten Aspekt der vorliegenden Erfindung ist keine Abschaltung des Roboters mehr notwendig, um kritische Situationen zu vermeiden, da ein Verfahren des Roboters in den Sicherheitsbereich in der mindestens einen offenen Position der Schleuse im Voraus verhindert wird.

Die vorliegende Erfindung umfasst gemäß einem zweiten Aspekt eine Werkstück-Schleuse für eine Vorrichtung zum Handhaben und/oder Bearbeiten von Werkstücken, welche einen Roboter zum Handhaben und/oder Bearbeiten der Werkstücke und eine Sicherheitsumzäunung aufweist, wobei die Werkstück-Schleuse in der Sicherheitsumzäunung angeordnet ist und es erlaubt, mindestens ein Werkstück von einem Bereich innerhalb der Sicherheitsumzäunung zu einem Bereich außerhalb der Sicherheitsumzäunung zu verbringen und/oder umgekehrt, wobei die Werkstück-Schleuse mindestens eine geschlossene Position aufweist, in welcher die Werkstück-Schleuse eine Öffnung in der Sicherheitsumzäunung verschließt, wobei der Roboter eine Steuerung aufweist, welche in der geschlossenen Position der Werkstück-Schleuse ein Beladen und/oder Entladen der Werkstück-Schleuse mit mindestens einem Werkstück und/oder ein Bearbeiten eines durch die Werkstückschleuse in den Bereich innerhalb der Sicherheitsumzäunung verbrachten Werkstücks erlaubt, wobei die Werkstückschleuse beim Verbringen eines Werkstücks von dem Bereich innerhalb der Sicherheitsumzäunung zu dem Bereich außerhalb der Sicherheitsumzäunung und/oder umgekehrt mindestens eine offene Position aufweist, in welcher sie die Öffnung in der Sicherheitsumzäunung zumindest teilweise freigibt. Gemäß dem zweiten Aspekt ist eine Sicherheitsfunktion vorgesehen, welche einen sich innerhalb und/oder außerhalb der Sicherheitsumzäunung um die Werkstück-Schleuse erstreckenden Sicherheitsbereich über mindestens einen Sensor überwacht und eine Abschaltung des Roboters vornimmt, wenn eine Bedienperson und/oder der Roboter in den Sicherheitsbereich eindringt, während sich die Schleuse in der mindestens einen offenen Position befindet.

Insbesondere ist zumindest ein Sensor vorgesehen, welcher einen sich innerhalb der Sicherheitsumzäunung um die Werkstück-Schleuse erstreckenden Sicherheitsbereich überwacht, wobei die Sicherheitsfunktion eine Abschaltung des Roboters vornimmt, wenn der Roboter in den Sicherheitsbereich eindringt, während sich die Werkstück-Schleuse in der mindestens einen offenen Position befindet.

Bei dem Sensor handelt es sich bevorzugt um einen optischen Sensor.

Als Sensor kann beispielsweise eine oder mehrere Lichtschrankenanordnungen und/oder ein Scanner eingesetzt werden.

Der zweite Aspekt lässt sich insbesondere auch dann einsetzen, wenn die Steuerung des Roboters eine Umsetzung des ersten Aspektes nicht erlaubt.

Gemäß beiden Aspekten der vorliegenden Erfindung wird eine Verletzung einer Bedienperson auch für den Fall verhindert, dass diese in der offenen Position der Werkstück-Schleuse einen Arm durch die Öffnung in der Sicherheitsumzäunung hindurch streckt und in den Arbeitsbereich des Roboters gerät.

Bevorzugte Ausgestaltungen der vorliegenden Erfindung, welche sich auf beide Aspekte beziehen, werden im Folgenden näher erläutert:
Bevorzugt wird die vorliegende Erfindung dann zum Einsatz, wenn die Werkstück-Schleuse mechanisch so ausgestaltet ist, dass eine Bedienperson in mindestens einer offenen Position der Werkstück-Schleuse ein Körperteil durch die Öffnung in der Sicherheitsumzäunung hindurch in den Arbeitsbereich des Roboters stecken kann.

Weiterhin bevorzugt ist die Werkstück-Schleuse mechanisch so ausgestaltet, dass eine Bedienperson auch in einer offenen Position der Werkstück-Schleuse nicht komplett in den Bereich innerhalb der Sicherheitsumzäunung gelangen kann.

Die Werkstück-Schleuse kann einen Griffbereich, insbesondere im Form eines Drehrings aufweisen, über welchen sie von Hand bewegt werden kann. Alternativ oder zusätzlich könnte ein Antrieb für die Werkstück-Schleuse vorgesehen sein.

Bei der die erfindungsgemäße Sicherheitsfunktion implementierenden Steuerung kann es sich um die Robotersteuerung, eine zur Robotersteuerung externe Steuerung oder eine Kombination aus beidem handeln.

Die Steuerung weist bevorzugt einen Mikrokontroller und/oder Prozessor sowie einen in einem Speicher abgelegten Programmcode mit Befehlen auf, welche, werden sie auf dem Mikrocontroller und/oder Prozessor durchgeführt, die erfindungsgemäße Sicherheitsfunktion implementieren. Die Steuerung kann mit Sensoren und/oder Aktoren in Kommunikations- und/oder Steuerverbindung stehen.

In einer bevorzugten Ausgestaltung der vorliegenden Erfindung ist die Sicherheitsfunktion bzw. der Sicherheitsbereich nicht aktiv, wenn sich die Schleuse in mindestens einer geschlossenen Position befindet.

Die Sicherheitsfunktion bzw. der Sicherheitsbereich ist daher bevorzugt nur während des Zeitraumes aktiv, in welchem sich die Werkstückschleuse nicht in mindestens einer geschlossenen Position befindet. In bestimmten Ausgestaltungen der vorliegenden Erfindung können dabei auch mehrere geschlossene Positionen und/oder ein Bereich von geschlossenen Positionen vorgesehen sein, in welchem die Sicherheitsfunktion bzw. der Sicherheitsbereich nicht aktiv sind.

In einer möglichen Ausgestaltung der vorliegenden Erfindung umfasst die Werkstück-Schleuse einen Sensor, mit welchem mindestens eine offene und/oder geschlossene Position der Werkstück-Schleuse erfasst wird. Der Sensor steht bevorzugt mit der Steuerung in Verbindung. Anhand des Sensors wird die Steuerung entweder in einen Sicherheitsmodus versetzt, in welcher sie wie oben angegeben arbeitet, oder in einen Normalmodus, in welchem sie nicht in die normale Tätigkeit des Roboters eingreift.

Bei dem Sensor kann es sich beispielsweise um einen oder mehrere Schalter handeln, welche durch eine Bewegung der Werkstück-Schleuse betätigt werden. Wird die Werkstück-Schleuse durch einen Antrieb betätigt, kann der Sensor auch eine Position und/oder Bewegung des Antriebs erfassen.

In einer möglichen Ausgestaltung der vorliegenden Erfindung umfasst die Werkstück-Schleuse eine Verriegelungsvorrichtung, welche eine Bewegung der Werkstück-Schleuse in eine offene Position verhindert, solange sich die Bedienperson und/oder der Roboter innerhalb des Sicherheitsbereichs befinden. Ob sich eine Bedienperson und/oder der Roboter innerhalb des Sicherheitsbereichs befindet, kann in einer möglichen Ausgestaltung über einen Sensor erfasst werden, bei dem zweiten Aspekt insbesondere über den optischen Sensor. Alternativ oder zusätzlich kann über Positionsdaten des Roboters aus der Robotersteuerung erfasst werden, ob sich diese innerhalb des Sicherheitsbereichs befindet. Diese Lösung kommt bevorzugt bei der Ausgestaltung der vorliegenden Erfindung gemäß dem ersten Aspekt zum Einsatz.

In einer möglichen Ausgestaltung der vorliegenden Erfindung umfasst die Werkstück-Schleuse eine Anforderungsfunktion, durch welche eine Bedienperson ein Be- oder Entladen der Werkstückschleuse mit einem Werkstück durch den Roboter und/oder ein Verfahren des Roboters aus dem Sicherheitsbereich anfordern kann.

Handelt es sich bei der Werkstück-Schleuse um eine SPC-Schleuse, kann durch die Anforderungsfunktion und die Werkstück-Schleuse jederzeit ein Werkstück aus dem Materialfluss innerhalb der Sicherheitsumzäunung zu Prüfzwecken entnommen werden.

Die Anforderung eines Verfahrens des Roboters aus dem Sicherheitsbereich ist unabhängig vom Einsatzzweck der von Vorteil, um die Werkstück-Schleuse bedienen zu können.

In einer möglichen Ausgestaltung der vorliegenden Erfindung umfasst die Werkstück-Schleuse einen Drehtisch und einen auf dem Drehtisch angeordneten Wandabschnitt, welcher in der mindestens einen verschlossenen Position der Werkstück-Schleuse die Öffnung in der Sicherheitsumzäunung verschließt und in der mindestens einen offenen Position die Öffnung zumindest teilweise freigibt.

In einer möglichen Ausgestaltung der vorliegenden Erfindung umfasst die Werkstück-Schleuse auf der äußeren Seite der Sicherheitsumzäunung ein Gehäuse auf, welcher den Zugriffsbereich zur Werkstück-Schleuse verkleinert. Weist die Werkstück-Schleuse einen Drehtisch auf, kann das Gehäuse so ausgestaltet sein, dass es den Drehtisch auf einer oder auf beiden Seiten der Öffnung um einen gewissen Winkelbereich umgibt.

In einer möglichen Ausgestaltung weist der Drehtisch mindestens einen Ablagebereich für mindestens ein Werkstück auf, so dass ein auf dem Ablagebereich abgelegtes Werkstück durch Drehen des Drehtisches von einem Bereich innerhalb der Sicherheitsumzäunung zu einem Bereich außerhalb der Sicherheitsumzäunung verbringbar ist und/oder umgekehrt. Insbesondere kann der Ablagebereich mindestens eine Werkstückaufnahme aufweisen, insbesondere ein Nest und/oder eine Pin.

Der Drehtisch kann von Hand drehbar sein, und weist hierfür bevorzugt einen umlaufenden Griffbereich auf. Alternativ oder zusätzlich kann der Drehtisch angetrieben werden, insbesondere über einen elektrischen, pneumatischen und/oder hydraulischen Antrieb.

In einer möglichen Ausgestaltung der vorliegenden Erfindung umfasst die Werkstück-Schleuse mindestens zwei Ablagebereiche für ein Werkstück auf, welche abwechselnd von einem Bereich innerhalb der Sicherheitsumzäunung zu einem Bereich außerhalb der Sicherheitsumzäunung verbringbar sind. Insbesondere kann der Drehtisch mindestens zwei Ablagebereiche aufweisen, von welchen in einer geschlossenen Position der Werkstück-Schleuse jeweils einer in einem Bereich innerhalb der Sicherheitsumzäunung und der andere in einem Bereich außerhalb der Sicherheitsumzäunung angeordnet ist.

Sind zwei Ablagebereiche vorgesehen, so werden diese bevorzugt durch den Wandabschnitt der Werkstück-Schleuse, welcher in der geschlossenen Position die Öffnung in der Sicherheitsumzäunung verschließt, voneinander getrennt.

Der Ablagebereich oder die Ablagebereiche können auch mehrere Werkstückablagen aufweisen. Dies ist beispielsweise bei einem Einsatz von kleinen Teilen oder einem Doppelgreifer von Vorteil. Hierdurch können gleichzeitig mehrere Werkstücke ausgeschleust und/oder eingeschleust werden.

Der oder die Ablagebereiche sind bevorzugt auf einem Drehtisch angeordnet.

In einer möglichen Ausgestaltung der vorliegenden Erfindung ist vorgesehen, dass sich innerhalb der Sicherheitsumzäunung aber außerhalb des Sicherheitsbereiches mindestens ein erster von der Werkstück-Schleuse unabhängiger Ablagebereich für mindestens ein Werkstück befindet, wobei die Steuerung ein Beladen und/oder Entladen des ersten Ablagebereiches mit einem Werkstück und/oder ein Bearbeiten eines Werkstücks in dem ersten Ablagebereich erlaubt, während sich die Werkstück-Schleuse in der mindestens einen offenen Position befindet.

Hierdurch kann auch bei einer offenen Werkstückschleuse die Arbeit innerhalb der Sicherheitsumzäunung fortgesetzt werden.

In einer möglichen Ausgestaltung der vorliegenden Erfindung ist vorgesehen, dass sich innerhalb der Sicherheitsumzäunung mindestens ein zweiter von der Werkstück-Schleuse unabhängiger Ablagebereich für mindestens ein Werkstück befindet, welcher in dem Sicherheitsbereich angeordnet ist. Dies kann insbesondere aus Platzgründen unvermeidlich sein.

Bevorzugt ist eine Prozesssteuerung vorgesehen, welche die Tätigkeit des Roboters automatisiert plant, wobei die Prozessteuerung ausschließlich ein Beladen und/oder Entladen eines ersten Ablagebereiches mit einem Werkstück und/oder das Bearbeiten eines Werkstücks in einem ersten Ablagebereich vornimmt und/oder ein Beladen und/oder Entladen des zweiten Ablagebereiches mit einem Werkstück und/oder das Bearbeiten eines Werkstücks in dem zweiten Ablagebereich ausschließt, solange sich die Werkstück-Schleuse in der mindestens einen offenen Position befindet.

Hierdurch wird es bereits durch eine entsprechende Prozesssteuerung unwahrscheinlicher, dass der Roboter ohne die erfindungsgemäßen Sicherheitsfunktionen bei seiner Tätigkeit in den Sicherheitsbereich eindringen würde, so dass diese weniger häufig eingreifen müssen.

Sind ein erster und ein zweiter Ablagebereich für ein Werkstück vorgesehen, wie sie oben beschrieben wurden, so ist bevorzugt vorgesehen, dass diese im Hinblick auf den Materialfluss innerhalb der Sicherheitsumzäunung parallel mit der gleichen Funktion einsetzbar sind.

Bevorzugt ist die Prozessteuerung so ausgestaltet, dass sie ein Beladen und/oder Entladen sowohl des ersten als auch des zweiten Ablagebereiches mit einem Werkstück und/oder ein Bearbeiten eines Werkstücks sowohl in dem ersten als auch dem zweiten Ablagebereich vorsieht, solange sich die Werkstück-Schleuse in einer geschlossenen Position befindet.

In einer möglichen Ausgestaltung der vorliegenden Erfindung erlaubt die Werkstück-Schleuse ein Entnehmen und/oder Zurückführen von Werkstücken aus dem und/oder in den Materialfluss innerhalb der Sicherheitsumzäunung zu Prüfzwecken. Insbesondere kann es sich um eine SPC-Schleuse handeln.

In einer möglichen Ausgestaltung der vorliegenden Erfindung erlaubt ein Beladen und/oder Entladen eines innerhalb der Sicherheitsumzäunung vorgesehenen Materialflusses mit Werkstücken. Insbesondere kann es sich bei der Werkstück-Schleuse damit um eine Be- und/oder Entladestation handeln.

In einer möglichen Ausgestaltung der vorliegenden Erfindung weist der Roboter einen Roboterarm auf, wobei es sich insbesondere um einen 6-Achs-Industrieroboter handelt.

Alternativ oder zusätzlich kann der Roboter ein Flächen- und/oder Linearportal umfassen.

In einer möglichen Ausgestaltung der vorliegenden Erfindung weist der Roboter einen Greifer zum Handhaben der Werkstücke und/oder ein Werkzeug zum Bearbeiten der Werkstücke auf. Bei dem Greifer kann es sich bevorzugt um einen mechanischen, pneumatischen und/oder magnetischen Greifer handeln. Der Greifer kann zum Greifen eines oder mehrerer Werkstücke vorgesehen sein.

Die vorliegende Erfindung umfasst weiterhin eine Vorrichtung zur Handhabung und/oder Bearbeitung eines Werkstücks mit einer Sicherheitsumzäunung, einem innerhalb einer Sicherheitsumzäunung angeordneten Roboter und einer in der Sicherheitsumzäunung angeordneten Werkstückschleuse, wie sie oben beschrieben wurde.

Weiterhin umfasst die vorliegende Erfindung ein Verfahren zum Betrieb einer erfindungsgemäßen Vorrichtung, mit den Schritten:
- Be- und/oder Entladen der Werkstück-Schleuse mit mindestens einem Werkstück, während sich die Werkstück-Schleuse in der geschlossenen Position befindet, und
- Verbringen des Werkstücks von dem Bereich innerhalb der Sicherheitsumzäunung zu dem Bereich außerhalb der Sicherheitsumzäunung und/oder umgekehrt durch Betätigung der Werkstück-Schleuse, welche hierbei mindestens eine offene Position aufweist, in welcher sie die Öffnung in der Sicherheitsumzäunung zumindest teilweise freigibt.

Das Verfahren ist gemäß dem ersten Aspekt dadurch gekennzeichnet, dass eine Bewegung des Roboters in einen sich innerhalb der Sicherheitsumzäunung um die Werkstück-Schleuse erstreckenden Sicherheitsbereich durch die Steuerung des Roboters verhindert wird, wenn sich die Schleuse in der mindestens einen offenen Position befindet. Gemäß dem zweiten Aspekt ist das Verfahren dadurch gekennzeichnet, dass ein sich innerhalb und/oder außerhalb der Sicherheitsumzäunung um die Werkstück-Schleuse erstreckender Sicherheitsbereich über mindestens einen Sensor überwacht und eine Abschaltung des Roboters vorgenommen wird, wenn eine Bedienperson und/oder der Roboter in den Sicherheitsbereich eindringt, während sich die Schleuse in der mindestens einen offenen Position befindet.

Bevorzugt erfolgt das Verfahren so, wie dies oben bereits näher beschrieben wurde.

Bevorzugt erfolgt die erfindungsgemäße Ansteuerung des Roboters und oder die Durchführung der Sicherheitsfunktionen gemäß der vorliegenden Erfindung automatisiert durch eine Steuerung.

Die vorliegende Erfindung wird nun anhand von Ausführungsbeispielen und Zeichnungen näher beschrieben:
Dabei zeigen:
- Fig. 1:: ein erstes Ausführungsbeispiel einer erfindungsgemäßen Vorrichtung zum Handhaben oder Bearbeiten von Werkstücken mit einem ersten Ausführungsbeispiel einer erfindungsgemäßen Werkstück-Schleuse,
- Fig. 2a:: das erste Ausführungsbeispiel einer Werkstückschleuse in einer Ansicht von außerhalb der Sicherheitsumzäunung, in einer ersten offenen Stellung bei einem Drehwinkel von 45°,
- Fig. 2b:: das erste Ausführungsbeispiel einer Werkstück-Schleuse in einer Ansicht von innerhalb der Sicherheitsumzäunung, in der ersten offenen Position mit einem Drehwinkel von 45°,
- Fig. 3a:: das erste Ausführungsbeispiel einer erfindungsgemäßen WerkstückSchleuse in einer Ansicht von außerhalb der Sicherheitsumzäunung, in einer zweiten offenen Position mit einem Drehwinkel von 90°,
- Fig. 3b:: das erste Ausführungsbeispiel einer Werkstück-Schleuse in einer Ansicht von innerhalb der Sicherheitsumzäunung, in der zweiten offenen Position mit einem Drehwinkel von 90°, und
- Fig. 4:: ein zweites Ausführungsbeispiel einer erfindungsgemäßen Vorrichtung zum Handhaben und/oder Bearbeiten von Werkstücken mit einem zweiten Ausführungsbeispiel einer erfindungsgemäßen Werkstück-Schleuse.

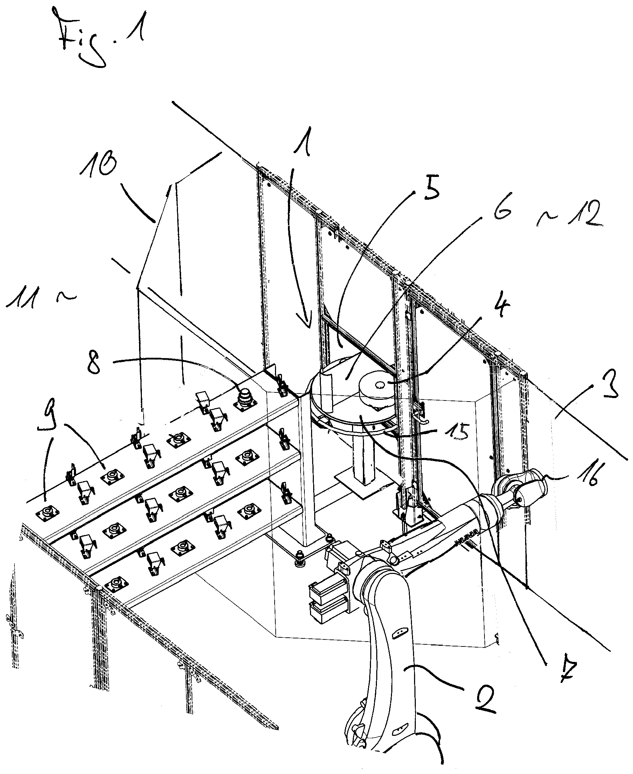

Fig. 1 zeigt ein erstes Ausführungsbeispiel einer erfindungsgemäßen Vorrichtung zum Handhaben und/oder Bearbeiten von Werkstücken mit einem ersten Ausführungsbeispiel einer erfindungsgemäßen Werkstück-Schleuse 1.

Die erfindungsgemäße Vorrichtung weist neben der Werkstück-Schleuse 1 einen Roboter 2 zum Handhaben und/oder Bearbeiten von Werkstücken 4 sowie eine Sicherheitsumzäunung 3 auf, welche den Arbeitsbereich des Roboters 2 umgibt.

Die Sicherheitsumzäunung 3 verhindert, dass Bedienpersonen unbefugt in den Arbeitsbereich des Roboters 2 gelangen und hierdurch Verletzungen durch den Roboter ausgesetzt sind. Die Sicherheitsumzäunung 3 kann beispielsweise aus entsprechenden Zellenwänden und/oder Wandabschnitten bestehen. Bei der erfindungsgemäßen Vorrichtung kann es sich insbesondere um eine Roboterzelle handeln.

Im Ausführungsbeispiel ist an dem Roboter 2 ein Greifer 16 angeordnet, über welchen Werkstücke 4 gegriffen und gehandhabt werden können. Im Ausführungsbeispiel sind innerhalb der Sicherheitsumzäunung 3 eine Mehrzahl von Werkstückablagen 8 und 9 vorgesehen, auf welchen der Roboter 2 Werkstücke ablegen und/oder von welchen der Roboter Werkstücke abnehmen kann. Die Werkstück-Schleuse dient im Ausführungsbeispiel der Entnahme von Werkstücken 4 aus dem Materialfluss innerhalb der Sicherheitsumzäunung, insbesondere zu Prüfzwecken. Die Werkstücke werden hierfür durch den Roboter auf einer Werkstückablage der Werkstück-Schleuse abgelegt. Die Werkstück-Schleuse erlaubt dann ein Entnehmen des Werkstücks aus dem Bereich innerhalb der Sicherheitsumzäunung in einem Bereich außerhalb der Sicherheitsumzäunung, beispielsweise um das Werkstück im Rahmen von Qualitäts-Kontrollmaßnahmen zu prüfen.

Weiterhin erlaubt die Werkstück-Schleuse ein Wiedereinschleusen des Werkstücks von außerhalb der Sicherheitsumzäunung in einen Bereich innerhalb der Sicherheitsumzäunung. Der Roboter 16 kann hierfür ein Werkstück 4 von der Werkstückablage der Werkstückschleuse greifen und zurück in dem Materialfluss innerhalb der Sicherheitsumzäunung eingliedern.

Die erfindungsgemäße Werkstückschleuse könnte in gleicher Weise jedoch auch zum Be- oder Entladen einer innerhalb der Sicherheitsumzäunung angeordneten Maschinenumgebung eingesetzt werden. Auch in diesem Fall kann es sich bei dem Roboter 2 um einen Handhabungsroboter mit einem Greifer 16 handeln.

Weiterhin ist denkbar, dass es sich beim Roboter 2 um einen Bearbeitungsroboter handelt, welcher ein Werkzeug trägt.

Im Ausführungsbeispiel wird als Roboter 2 ein 6-Achs-lndustrieroboter eingesetzt. Erfindungsgemäß können jedoch auch beliebige andere Roboter eingesetzt werden, beispielsweise Linear- und/oder Flächenportale.

Die Werkstück-Schleuse 1 ist erfindungsgemäß in der Sicherheitsumzäunung 3 angeordnet, welche im Bereich der Werkstück-Schleuse 1 eine Öffnung 5 aufweist. Die Werkstückschleuse 1 weist einen Wandabschnitt 6 auf, welcher in mindestens einer geschlossenen Position der Werkstück-Schleuse die Öffnung 5 verschließt. In dieser geschlossenen Position verhindert der Wandabschnitt der Werkstückschleuse daher, dass eine Bedienperson durch die Werkstück-Schleuse hindurch in den Arbeitsbereich des Greifers des Roboters 2 greifen könnte. In der geschlossenen Position kann der Roboter 2 daher beispielsweise ein Werkstück 4 auf einer Werkstückablage der Werkstück-Schleuse ablegen, und ist auch sonst frei in seiner Betätigung.

Durch Betätigen der Werkstück-Schleuse 1 kann das Werkstück dann auf der Werkstückaufnahme der Werkstück-Schleuse von dem Bereich innerhalb der Sicherheitsumzäunung in einem Bereich außerhalb der Sicherheitsumzäunung verbracht werden, wo es von einer Bedienperson entnommen werden kann. Der Wandabschnitt 6 der Werkstück-Schleuse gibt jedoch während dieser Bewegung der Werkstück-Schleuse in mindestens einer offenen Position die Öffnung 5 zumindest teilweise frei. Während dieses Zeitraums besteht daher die Gefahr, dass eine Bedienperson durch die Öffnung 5 hindurch beispielsweise eine Hand oder einen Arm durch die Sicherheitsumzäunung 3 hindurch in den Bereich innerhalb der Sicherheitsumzäunung und damit den Arbeitsbereich des Roboters 2 bewegt.

Um eine Verletzung der Bedienperson sicher zu verhindern, weist die erfindungsgemäße Werkstück-Schleuse daher eine Sicherheitsfunktion auf.

Gemäß einem ersten Aspekt der vorliegenden Erfindung verhindert diese Sicherheitsfunktion eine Bewegung des Roboters in einen sich innerhalb der Sicherheitsumzäunung und die Werkstück-Schleuse erstreckenden Sicherheitsbereich 10, wenn sich die Werkstück-Schleuse 1 in einer offenen Position befindet. Insbesondere ist die Sicherheitsfunktion in der Steuerung des Roboters 2 implementiert und wird aktiviert, wenn die Schleuse von einer geschlossenen Position in eine offene Position bewegt wird. Der entsprechende Sicherheitsbereich 10 ist hierfür bevorzugt in der Steuerung des Roboters 2 hinterlegt.

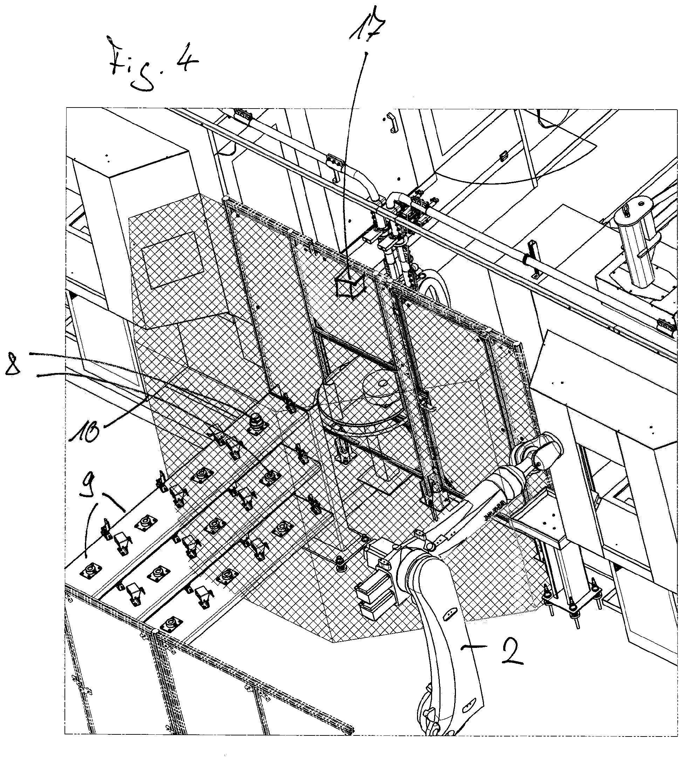

Gemäß einem zweiten Aspekt der vorliegenden Erfindung, welcher in Fig. 4 näher dargestellt ist, überwacht die Sicherheitsfunktion einen sich innerhalb und/oder außerhalb der Sicherheitsumzäunung um die Werkstück-Schleuse erstreckenden Sicherheitsbereich 10 über mindestens einen Sensor 17 und nimmt eine Abschaltung des Roboters 2 vor, wenn eine Bedienperson und/oder Roboter in den Sicherheitsbereich 10 eindringt und sich die Schleuse in der mindestens einen Position befindet. Auch hier wird die Sicherheitsfunktion daher nur aktiviert, wenn die Schleuse 1 von einer geschlossenen in eine offene Position verbracht wird.

Im Hinblick auf ihren mechanischen Aufbau sind das erste und das zweite Ausführungsbeispiel der erfindungsgemäßen Werkstück-Schleuse dagegen identisch aufgebaut. Diese in den Ausführungsbeispielelen eingesetzte mechanische Ausgestaltung der erfindungsgemäßen Werkstück-Schleuse soll nun im Folgenden anhand der Fig. 1 bis 4 näher beschrieben werden.

Die erfindungsgemäße Werkstück-Schleuse 1 weist einen Drehtisch 7 auf, welcher sich teilweise innerhalb und teilweise außerhalb der Sicherheitsumzäunung befindet und sich durch die Öffnung 5 der Sicherheitsumzäunung 3 hindurch erstreckt. Auf dem Drehtisch 7 ist der Wandabschnitt 6 angeordnet, welcher in einer geschlossenen Position die Öffnung 5 in der Sicherheitsumzäunung 3 verschließt. Der Wandabschnitt 6 dient dabei gleichzeitig als Trennwand zwischen zwei Ablagebereichen auf dem Drehtisch 7. Beide Ablagebereiche 7 weisen eine Werkstückablage 13 bzw. 13' auf, auf welcher jeweils ein Werkstück 4 abgelegt werden kann. In einer alternativen Ausführungsform könnten die Ablagebereiche 7 auch jeweils zwei oder mehr Werkstückablagen aufweisen, bspw. wenn kleine Werkstücke gehandhabt werden und/oder ein Mehrfach-Greifer eingesetzt wird.

Die Werkstück-Schleuse weist insgesamt zwei geschlossene Positionen auf, in welchen der Wandabschnitt 6 die Öffnung 5 verschließt. In der einen Position ist die erste Werkstückablage 13 außerhalb der Sicherheitsumzäunung und die zweite Werkstückablage 13' innerhalb der Sicherheitsumzäunung angeordnet, in der zweiten geschlossenen Position ist die Anordnung genau umgekehrt. Die Werkstück-Schleuse kann durch eine Drehung des Drehtisches 7 um 180° von der einen geschlossenen Position in die andere geschlossene Position verbracht werden. Hierdurch vertauschen die beiden Werkstückablagen 13 und 13' ihre Position, so dass ein Werkstück von innerhalb der Sicherheitsumzäunung nach außen verbracht und gleichzeitig ein Werkstück von außerhalb der Sicherheitsumzäunung in den Bereich innerhalb der Sicherheitsumzäunung verbracht werden kann.

Die erfindungsgemäße Werkstück-Schleuse erlaubt in dem dargestellten Ausführungsbeispiel daher das gleichzeitige Ausschleusen und Einschleusen eines Werkstücks. In alternativen Ausgestaltungen der vorliegenden Erfindung ist es jedoch ebenfalls denkbar, dass die Werkstück-Schleuse lediglich eine der Werkstückaufnahmen 13 oder 13' aufweist und/oder mit einem Schleuse-Vorgang lediglich das Ausschleusen oder lediglich das Einschleusen eines Werkstücks ermöglicht.

Im Ausführungsbeispiel erweist die Werkstück-Schleuse einen Drehring 15 auf, über welchen sie von Hand bewegt werden kann. Alternativ könnte ein Antrieb für die Werkstück-Schleuse vorgesehen sein, durch welchen diese von der ersten geschlossenen Position in die zweite geschlossene Position und zurück verbracht werden kann.

Die Werkstück-Schleuse weist auf der äußeren Seite der Sicherheitsumzäunung ein Gehäuse 14 auf, welcher den Zugriffsbereich zur Werkstück-Schleuse verkleinert. Insbesondere ist der von dem Gehäuse 14 offene gelassene Bereich kleiner als die Öffnung 5 in der Sicherheitsumzäunung.

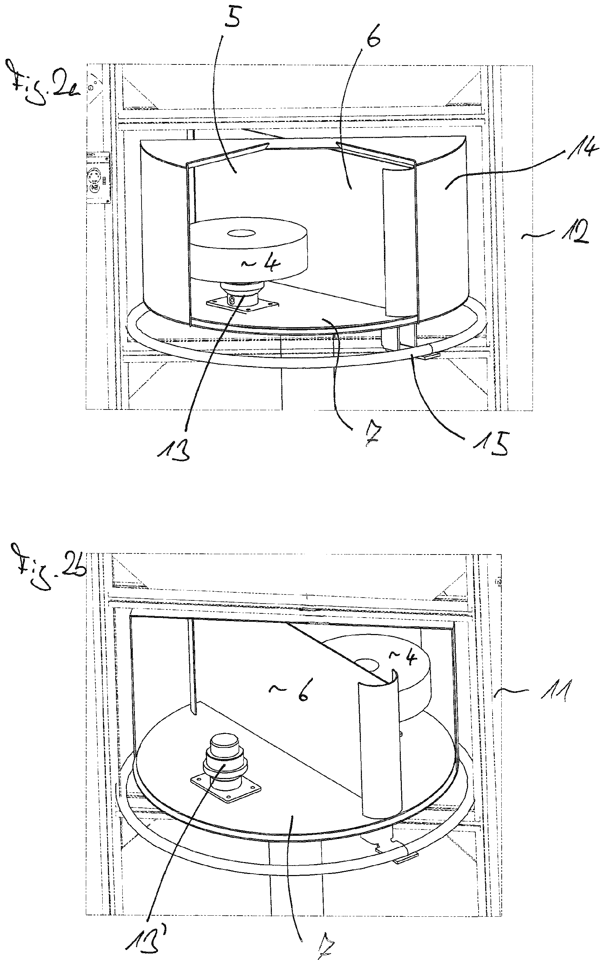

Im Ausführungsbeispiel ist das Gehäuse 14 so ausgestaltet, dass es den Drehtisch 7 auf beiden Seiten der Öffnung 5 um einen gewissen Winkelbereich umgibt. Die Trennwand 6 gibt die Öffnung 5 daher zumindest auf einer Seite erst nach einer gewissen Drehbewegung frei. Dies ist beispielsweise in Fig. 2a bei einer Stellung von 45° des Drehtisches aus der geschlossenen Position ersichtlich, da die Trennwand 6 hier noch mit dem Gehäuse 14 abschließt und daher auf der rechten Seite ein Durchgreifen durch die Öffnung 5 nicht möglich ist.

Wie aus Fig. 2b ersichtlich, ist auf der Innenseite jedoch kein entsprechendes Gehäuse vorgesehen. Auf der anderen Seite ist daher bereits in dieser Position ein Hindurchgreifen durch die Öffnung 5 möglich. In alternativen Ausgestaltungen wäre es jedoch ebenfalls denkbar, auch auf der Innenseite ein entsprechendes Gehäuse vorzusehen, so dass sich ein ganzer Bereich von geschlossenen Positionen der Werkstück-Schleusen ergeben würde, bzw. der Bereich der offenen Positionen verringert würde.

Durch das Gehäuse wird bereits durch die mechanische Ausgestaltung das Hindurchgreifen durch die Werkstück-Schleuse erschwert. Eine solche mechanische Sicherheitsfunktion ist jedoch erfindungsgemäß nicht zwingend notwendig, da die Sicherheitsfunktion der erfindungsgemäßen Steuerung eine Verletzung einer Bedienperson sicher verhindert.

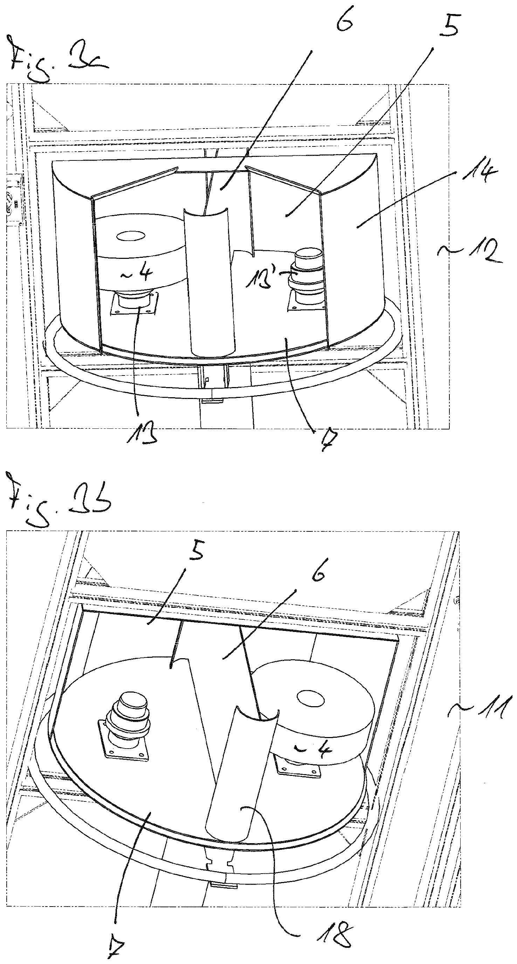

In Fig. 3a und 3b ist die Werkstück-Schleuse nun in einer um 90° gegenüber der geschlossenen Position gedrehten Stellung gezeigt, in welcher ein Durchgriff durch die Öffnung 5 auf beiden Seiten der Trennwand 6 möglich ist.

Der Wandabschnitt 6 der Werkstück-Schleuse weist im Ausführungsbeispiel jeweils abgerundete Endabschnitte 18 auf, welche die Verletzungsgefahr durch das Einklemmen von Fingern zwischen dem Wandabschnitt 6 und dem Gehäuse 14 bzw. der Kanten der Öffnung 5 der Sicherheitsumzäunung beim Drehen des Drehtisches verringern sollen.

Die erfindungsgemäße Vorrichtung arbeitet im Ausführungsbeispiel wie folgt:
Befindet sich die Werkstück-Schleuse 1 in einer geschlossenen Position, kann ein Werkstück 4 angefordert werden, so dass die Werkstückablage 13 oder 13', welche sich auf der Innenseite der Sicherheitsumzäunung 3 befindet, durch den Roboter 2 mit dem Werkstück 4 beladen werden. Bevorzugt weist die Vorrichtung hierfür eine Anforderungsfunktion aus, welche von einem Bediener betätigt werden kann, so dass der Roboter ein Werkstück aus dem Materialfluss entnimmt und auf der Werkstückablage der Werkstück-Schleuse ablegt. In der geschlossenen Position der Werkstück-Schleuse ist ein Hineingreifen in die Roboterzelle nicht möglich, da der Wandabschnitt 6 der Werkstück-Schleuse die Öffnung 5 in der Sicherheitsumzäunung 3 verschließt.

Ein Ausschleusen des Werkstückes erfolgt durch Drehen des Drehtisches, im vorliegenden Fall durch ein Drehen des Drehtisches 7 über die Griffstange 15. Hierdurch wird das auf der Werkstückablage 13 bzw. 13' abgelegte Werkstück nach außen geschleust.

Nach einer Drehung des Drehtisches um 180° kann das Werkstück von außen entnommen werden. Auch in dieser Position ist die Öffnung 5 durch den Wandabschnitt 6 der Werkstück-Schleuse 1 geschlossen, so dass ein Hineingreifen durch die Werkstück-Schleuse in die Roboterzelle nicht möglich ist.

Gleichzeitig steht innerhalb der Sicherheitsumzäunung eine weitere Werkstückablage zur Verfügung, welche durch den Roboter beladen werden könnte. Auch hierfür ist eine entsprechende Anforderungsfunktion vorgesehen.

Zum Wiedereinschleusen kann das Werkstück, bspw. nach einer durchgeführten Prüfung, wieder auf der Außenseite auf eine Werkstückablage 13, 13' des Drehtisches gelegt werden und durch Drehen wieder eingeschleust werden. Gleichzeitig kann - wenn der Drehtisch auf der Innenseite in der Zwischenzeit beladen wurde - ein weiteres Werkstück ausgeschleust werden.

In den beiden geschlossenen Positionen besteht daher kein Sicherheitsrisiko, so dass der Roboter uneingeschränkt innerhalb der Sicherheitsumzäunung arbeiten kann. Während der Drehbewegung wird jedoch die Öffnung 5 zumindest teilweise freigegeben, so dass ein Bediener in die Roboterzelle hineingreifen könnte.

Um eine Verletzung der Bedienperson dennoch sicher vermeiden zu können, ist bei der Sicherheitsfunktion gemäß dem ersten Aspekt der vorliegenden Erfindung für den Zeitraum, in welchem die Werkstück-Schleuse geöffnet ist, für den Roboter ein Sicherheitsbereich 10 definiert, in welchen er nicht einfahren bzw. welchen er nicht überfahren darf. Will der Roboter in diesem Zeitraum ein Werkstück innerhalb des Sicherheitsbereiches ablegen, beispielsweise auf einer innerhalb des Sicherheitsbereiches angeordneten Werkstückablage 8, hält er an, bis das Werkstück ausgeschleust ist und sich die Werkstück-Schleuse wieder in einer geschlossenen Position befindet, beispielsweise indem die 180°-Drehung abgeschlossen ist.

Ist die Werkstück-Schleuse wieder in einer geschlossenen Position, beispielsweise indem der Drehtisch um 0° oder 180° gedreht ist und der Wandabschnitt 6 die Öffnung 5 verschließt, wird der Sicherheitsbereich wieder aufgehoben und der Roboter kann wieder alle Positionen anfahren. Der Sicherheitsbereich ist also nur während des Zeitraums aktiv, in welchem die Werkstück-Schleuse geöffnet ist, d.h. in der Zeit, welche zum Drehen des Drehtisches benötigt wird.

Der Sicherheitsbereich 10 ist bevorzugt innerhalb der Robotersteuerung definiert und wird, ist die Sicherheitsfunktion aktiviert, von der Robotersteuerung berücksichtigt. Insbesondere kann der Sicherheitsbereich dabei geometrisch definiert sein.

Bei einer Sicherheitsfunktion gemäß dem zweiten Aspekt ist dagegen in dem in Fig. 4 gezeigten Ausführungsbeispiel ein Sensor 17 vorgesehen, welcher einen innerhalb der Sicherheitsumzäunung um die Werkstückschleuse angeordneten Sicherheitsbereich 10 überwacht. Auch diese Sicherheitsfunktion wird nur aktiviert, wenn die Werkstückschleuse sich in einer offenen Position befindet, und ist deaktiviert, wenn die Werkstück-Schleuse sich in einer geschlossenen Position befindet.

Gemäß dem zweiten Aspekt wird der Sicherheitsbereich durch den Sensor 17 daraufhin überwacht, ob der Roboter 2 in den Sicherheitsbereich 10 eindringt. Wird dies erkannt, während die Sicherheitsfunktion aktiv ist, wird der Roboter abgeschaltet. Eine solche Lösung kann daher auch dann implementiert werden, wenn die Robotersteuerung selbst nicht die Definition eines Sicherheitsbereichs ermöglicht. Sie hat jedoch den Nachteil, dass zum einen ein zusätzlicher Sensor benötigt, wird, und zum anderen ein Abschalten des Roboters 2 in Kauf genommen werden muss. Gemäß dem ersten Aspekt kann ein solches Abschalten des Roboters dagegen zuverlässig verhindert werden, da der Sicherheitsbereich innerhalb der Robotersteuerung definiert ist.

Bei dem Sensor 17 kann es sich, wie in Fig. 4 dargestellt, beispielsweise um einen im Bereich oberhalb der Werkstück-Schleuse angeordneten Scanner handeln, welcher den Sicherheitsbereich 10 überwacht. Alternativ oder zusätzlich wäre der Einsatz von Lichtschranken zur Erzeugung eines überwachten Sicherheitsbereiches denkbar.

Unabhängig davon, welcher Aspekt der vorliegenden Erfindung zum Einsatz kommt, weist die Werkstück-Schleuse bevorzugt einen Sensor auf, durch welchen eine geschlossene und/oder offene Position der Werkstück-Schleuse erkannt wird, und über dessen Signal die Sicherheitsfunktion aktiviert bzw. deaktiviert wird.

Um den Materialfluss innerhalb der Sicherheitsumzäunung auch bei geöffneter Werkstück-Schleuse möglichst ohne Unterbrechung weiter betreiben zu können, kann weiterhin eine übergeordnete Prozesssteuerung vorgesehen sein, welche den Sicherheitsbereich bereits bei der Prozessplanung berücksichtigt.

Sind wie in den Ausführungsbeispielen in Fig. 1 und 4 dargestellt sowohl erste Werkstückaufnahmen 9 vorgesehen, welche außerhalb des Sicherheitsbereiches liegen, als auch zweite Werkstückaufnahmen 8, welche innerhalb des Sicherheitsbereiches 10 liegen, so plant die Prozesssteuerung die Tätigkeit des Roboters 2 bevorzugt in der Weise, dass bei aktivierter Sicherheitsfunktion oder einer bevorstehenden Öffnung der Schleuse der Roboter 2 nur noch Werkstücke von den ersten Werkstückablagen 9 aufnimmt bzw. auf diesen ablegt. Hierdurch wird die Wahrscheinlichkeit, dass der Roboter in dem Sicherheitsbereich 10 eindringen will oder eindringt, durch die ihm zugewiesenen Aufgaben verringert.

Eine entsprechende Prozesssteuerung kann beispielsweise über die Anforderungsfunktion getriggert werden. Nach dem durch die Anforderungsfunktion ausgelösten Ablegen eines Werkstückes auf der Werkstück-Schleuse wird der Roboter 2 daher bevorzugt so lange nur noch dazu eingesetzt, um Werkstücke auf Werkstückablagen 9 abzulegen oder aufzunehmen oder zu bearbeiten, welche außerhalb des Sicherheitsbereiches 10 liegen, bis das Werkstück ausgeschleust und die Werkstück-Schleuse sich wieder in einer geschlossenen Position befindet.

Alternativ oder zusätzlich kann die Anforderungsfunktion weiterhin bewirkten, dass der Roboter nach dem Ablegen eines Werkstücks auf der Werkstück-Schleuse aus dem Sicherheitsbereich 10 heraus fährt.

Bevorzugt weist die Werkstück-Schleuse weiterhin eine Verriegelungsfunktion auf, welche ein Öffnen der Werkstück-Schleuse erst dann erlaubt, wenn der Roboter 2 sich außerhalb des Sicherheitsbereiches 10 befindet.

Bei den in Fig. 1 bis 4 dargestellten Ausführungsbeispielen handelt es sich bei der Werkstück-Schleuse um eine SPC-Schleuse (Statistical Process Control), durch welche Werkstücke zur Prüfung aus dem Materialfluss entnommen werden können. Die erfindungsgemäße Werkstückschleuse kann jedoch auch zu beliebigen anderen Einsatzzwecken genutzt werden.

## Patentansprüche

1. Werkstück-Schleuse für eine Vorrichtung zum Handhaben und/oder Bearbeiten von Werkstücken, welche einen Roboter zum Handhaben und/oder Bearbeiten der Werkstücke und eine Sicherheitsumzäunung aufweist,
wobei die Werkstück-Schleuse in der Sicherheitsumzäunung angeordnet ist und es erlaubt, mindestens ein Werkstück von einem Bereich innerhalb der Sicherheitsumzäunung zu einem Bereich außerhalb der Sicherheitsumzäunung zu verbringen und/oder umgekehrt,
wobei die Werkstück-Schleuse mindestens eine geschlossene Position aufweist, in welcher die Werkstück-Schleuse eine Öffnung in der Sicherheitsumzäunung verschließt, wobei der Roboter eine Steuerung aufweist, welche in der geschlossenen Position der Werkstück-Schleuse ein Beladen und/oder Entladen der Werkstück-Schleuse mit mindestens einem Werkstück und/oder ein Bearbeiten eines durch die Werkstückschleuse in den Bereich innerhalb der Sicherheitsumzäunung verbrachten Werkstücks erlaubt,
wobei die Werkstückschleuse beim Verbringen eines Werkstücks von dem Bereich innerhalb der Sicherheitsumzäunung zu dem Bereich außerhalb der Sicherheitsumzäunung und/oder umgekehrt mindestens eine offene Position aufweist, in welcher sie die Öffnung in der Sicherheitsumzäunung zumindest teilweise freigibt,
**dadurch gekennzeichnet,**
**dass** die Steuerung eine Sicherheitsfunktion aufweist, welche eine Bewegung des Roboters in einen sich innerhalb der Sicherheitsumzäunung um die Werkstück-Schleuse erstreckenden Sicherheitsbereich verhindert, wenn sich die Schleuse in der mindestens einen offenen Position befindet.

2. Werkstück-Schleuse nach Anspruch 1, wobei für den Fall, dass eine für den Roboter vorgesehene Aufgabe ein Verfahren in den Sicherheitsbereich erforderlich macht, beispielsweise ein Ablegen, Aufnehmen und/oder Bearbeiten eines Werkstücks innerhalb des Sicherheitsbereiches ansteht, die Steuerung den Roboter anhält und/oder in eine sichere Position verfährt, bis sich die Werkstückschleuse wieder in einer geschlossenen Position befindet

3. Werkstück-Schleuse für eine Vorrichtung zum Handhaben und/oder Bearbeiten von Werkstücken, welche einen Roboter zum Handhaben und/oder Bearbeiten der Werkstücke und eine Sicherheitsumzäunung aufweist,
wobei die Werkstück-Schleuse in der Sicherheitsumzäunung angeordnet ist und es erlaubt, mindestens ein Werkstück von einem Bereich innerhalb der Sicherheitsumzäunung zu einem Bereich außerhalb der Sicherheitsumzäunung zu verbringen und/oder umgekehrt,
wobei die Werkstück-Schleuse mindestens eine geschlossene Position aufweist, in welcher die Werkstück-Schleuse eine Öffnung in der Sicherheitsumzäunung verschließt, wobei der Roboter eine Steuerung aufweist, welche in der geschlossenen Position der Werkstück-Schleuse ein Beladen und/oder Entladen der Werkstück-Schleuse mit mindestens einem Werkstück und/oder ein Bearbeiten eines durch die Werkstückschleuse in den Bereich innerhalb der Sicherheitsumzäunung verbrachten Werkstücks erlaubt,
wobei die Werkstückschleuse beim Verbringen eines Werkstücks von dem Bereich innerhalb der Sicherheitsumzäunung zu dem Bereich außerhalb der Sicherheitsumzäunung und/oder umgekehrt mindestens eine offene Position aufweist, in welcher sie die Öffnung in der Sicherheitsumzäunung zumindest teilweise freigibt,
**dadurch gekennzeichnet,**
**dass** eine Sicherheitsfunktion vorgesehen ist, welche einen sich innerhalb und/oder außerhalb der Sicherheitsumzäunung um die Werkstück-Schleuse erstreckenden Sicherheitsbereich über mindestens einen Sensor überwacht und eine Abschaltung des Roboters vornimmt, wenn eine Bedienperson und/oder der Roboter in den Sicherheitsbereich eindringt, während sich die Schleuse in der mindestens einen offenen Position befindet.

4. Werkstück-Schleuse nach einem der vorangegangenen Ansprüche, wobei die Sicherheitsfunktion nicht aktiv ist, wenn sich die Schleuse in mindestens einer geschlossenen Position befindet.

5. Werkstück-Schleuse nach Anspruch 1 oder 2, mit mindestens einem Sensor, mit welchem mindestens eine offene und/oder geschlossene Position der Werkstück-Schleuse erfasst wird, und/oder mit einer Verriegelungsvorrichtung, welche eine Bewegung der Werkstück-Schleuse in eine offene Position verhindert, solange sich die Bedienperson und/oder der Roboter innerhalb des Sicherheitsbereichs befindet.

6. Werkstück-Schleuse nach einem der vorangegangenen Ansprüche, mit einer Anforderungsfunktion, durch welche eine Bedienperson ein Be- oder Entladen der Werkstückschleuse mit einem Werkstück durch den Roboter und/oder ein Verfahren des Roboters aus dem Sicherheitsbereich anfordern kann.

7. Werkstück-Schleuse nach einem der vorangegangenen Ansprüche, mit einem Drehtisch und einem auf dem Drehtisch angeordneten Wandabschnitt, weleher in der mindestens einen geschlossenen Position der Werkstück-Schleuse die Öffnung in der Sicherheitsumzäunung verschließt.

8. Werkstück-Schleuse nach Anspruch 7, wobei der Drehtisch mindestens einen Ablagebereich für mindestens ein Werkstück aufweist, so dass ein auf dem Ablagebereich abgelegtes Werkstück durch Drehen des Drehtisches von einem Bereich innerhalb der Sicherheitsumzäunung zu einem Bereich außerhalb der Sicherheitsumzäunung verbringbar ist und/oder umgekehrt, wobei der Ablagebereich bevorzugt eine Werkstückaufnahme aufweist, insbesondere ein Nest und/oder eine Pin.

9. Werkstück-Schleuse nach einem der vorangegangenen Ansprüche, wobei die Werkstückschleuse mindestens zwei Ablagebereiche für ein Werkstück aufweist, welche abwechselnd von einem Bereich innerhalb der Sicherheitsumzäunung zu einem Bereich außerhalb der Sicherheitsumzäunung verbringbar sind.

10. Werkstück-Schleuse nach einem der vorangegangenen Ansprüche, wobei sich innerhalb der Sicherheitsumzäunung aber außerhalb des Sicherheitsbereiches mindestens ein erster von der Werkstück-Schleuse unabhängiger Ablagebereich für mindestens ein Werkstück befindet, wobei die Steuerung ein Beladen und/oder Entladen des ersten Ablagebereiches mit einem Werkstück und/oder ein Bearbeiten eines Werkstücks in dem ersten Ablagebereich erlaubt, während sich die Werkstück-Schleuse in der mindestens einen offenen Position befindet, und/oder wobei sich innerhalb der Sicherheitsumzäunung mindestens ein zweiter von der Werkstück-Schleuse unabhängiger Ablagebereich für mindestens ein Werkstück befindet, welcher in dem Sicherheitsbereich angeordnet ist, wobei bevorzugt der erste und der zweite Ablagebereich im Hinblick auf den Materialfluss innerhalb der Sicherheitsumzäunung parallel mit der gleichen Funktion einsetzbar sind.

11. Werkstück-Schleuse nach Anspruch 10, mit einer Prozesssteuerung, welche die Tätigkeit des Roboters automatisiert plant, wobei die Prozessteuerung ausschließlich ein Beladen und/oder Entladen eines ersten Ablagebereiches mit einem Werkstück und/oder das Bearbeiten eines Werkstücks in einem ersten Ablagebereich vornimmt und/oder ein Beladen und/oder Entladen des zweiten Ablagebereiches mit einem Werkstück und/oder das Bearbeiten eines Werkstücks in dem zweiten Ablagebereich ausschließt, solange sich die Werkstück-Schleuse in der mindestens einen offenen Position befindet.

12. Werkstück-Schleuse nach einem der vorangegangenen Ansprüche, wobei die Werkstück-Schleuse ein Entnehmen und/oder Zurückführen von Werkstücken aus dem und/oder in den Materialfluss innerhalb der Sicherheitsumzäunung zu Prüfzwecken erlaubt, und/oder wobei die Werkstück-Schleuse ein Beladen und/oder Entladen eines innerhalb der Sicherheitsumzäunung vorgesehenen Materialflusses mit Werkstücken erlaubt.

13. Werkstück-Schleuse nach einem der vorangegangenen Ansprüche, wobei der Roboter einen Roboterarm aufweist, insbesondere einen 6-Achs-Industrieroboter, und/oder wobei der Roboter ein Flächen- und/oder Linearportal umfasst, und/oder wobei der Roboter einen Greifer zum Handhaben der Werkstücke und/oder ein Werkzeug zum Bearbeiten der Werkstücke aufweist.

14. Vorrichtung zur Handhabung und/oder Bearbeitung eines Werkstücks mit einer Sicherheitsumzäunung, einem innerhalb einer Sicherheitsumzäunung angeordneten Roboter und einer in der Sicherheitsumzäunung angeordneten Werkstückschleuse nach einem der vorangegangenen Ansprüche.

15. Verfahren zum Betrieb einer Vorrichtung nach Anspruch 14, mit den Schritten:
- Be- und/oder Entladen der Werkstück-Schleuse mit mindestens einem Werkstück, während sich die Werkstück-Schleuse in der geschlossenen Position befindet, und
- Verbringen des Werkstücks von dem Bereich innerhalb der Sicherheitsumzäunung zu dem Bereich außerhalb der Sicherheitsumzäunung und/oder umgekehrt durch Betätigung der Werkstück-Schleuse, welche hierbei mindestens eine offene Position aufweist, in welcher sie die Öffnung in der Sicherheitsumzäunung zumindest teilweise freigibt,
**dadurch gekennzeichnet,**
**dass** eine Bewegung des Roboters in einen sich innerhalb der Sicherheitsumzäunung um die Werkstück-Schleuse erstreckenden Sicherheitsbereich durch die Steuerung des Roboters verhindert wird, wenn sich die Schleuse in der mindestens einen offenen Position befindet,
und/oder
**dass** ein sich innerhalb und/oder außerhalb der Sicherheitsumzäunung um die Werkstück-Schleuse erstreckender Sicherheitsbereich über mindestens einen Sensor überwacht und eine Abschaltung des Roboters vorgenommen wird, wenn eine Bedienperson und/oder der Roboter in den Sicherheitsbereich eindringt, während sich die Schleuse in der mindestens einen offenen Position befindet.
